# EUROPÄISCHE PATENTANMELDUNG

(11) **EP 2 703 656 A1**
(43) Veröffentlichungstag der Anmeldung: **05.03.2014**
(21) Anmeldenummer: 13004047.0
(22) Anmeldetag: 14.08.2013
(51) Int. Cl.: F16B 12/20, F16B 5/00

(54) **Verbindungsmittel mit Magnetantrieb**

(30) Priorität: 29.08.2012 DE 102012017106
(71) Anmelder: Polenz, Jürgen, 59348 Lüdinghausen (DE)
(72) Erfinder: Polenz, Jürgen, 59348 Lüdinghausen (DE)
(74) Vertreter: Schulte & Schulte

(57) **Zusammenfassung**

Ein Verbindungsmittel (1) dient zum lösbaren Verbinden von Bauelementen, Möbeln oder Teilen von diesen und umfasst zwei miteinander zu verbindende Teilgehäuse (2, 3). Von diesen weist ein Teilgehäuse (2) mindestens ein zwischen einer eingefahrenen Vorposition und einer ausgefahrenen Fixierposition verstellbares Verstellglied (4, 5) auf. Zum Ein- und Ausfahren des Verstellgliedes (4, 5) dient mindestens ein in dem Teilgehäuse (2) angeordneter Magnet (6, 7). Dieser Magnet (6, 7) ist von außerhalb des Teilgehäuses (2) zwischen zwei der Vorposition und der Fixierposition des Verstellgliedes (4, 5) entsprechenden Stellungen verstellbar.

## Beschreibung

Die Erfindung betrifft ein Verbindungsmittel zum lösbaren Verbinden von Bauelementen, Möbeln oder Teilen von diesen, mit zwei miteinander zu verbindenden Teilgehäusen, von denen ein Teilgehäuse mindestens ein zwischen einer eingefahrenen Vorposition und einer ausgefahrenen Fixierposition verstellbares Verstellglied aufweist.

Solche Verbindungsmittel werden eingesetzt, um lösbare Verbindungen zwischen benachbarten Bauelementen, Möbeln oder Teilen von diesen herzustellen, etwa für diverse Verkleidungen im Innen- und Außenbau. Gedacht ist z. B. an Fassadenelemente oder aus mehreren Bauelementen zusammengesetzte Verkleidungspaneele für Ladenlokale. In diese werden häufig Monitore, Displays oder andere elektronische Einrichtungen unter Berücksichtigung von diversen Vor- und Rücksprüngen, Einbauten, Fächern etc. integriert. Übergänge, Anschlüsse von Verkleidungspaneelen untereinander oder im Bereich von Boden und Decke, Winkel, Ecken, Fugen etc. müssen dabei höchsten Ansprüchen genügen, was wiederum Verbindungsmittel von höchster Qualität erfordert. Aus der EP 1 056 953 sind Verbindungsmittel zum lösbaren Verbinden zweier Bauteile bekannt, bei denen jeweils im verbundenen Zustand ein Teilgehäuse an einem ersten Bauelement und das andere Teilgehäuse an dem benachbarten Teilgehäuse fixiert ist. Diese Verbindungen umfassen ein Kupplungsmittel, das bei Einwirkung eines zeitlich veränderten Antriebsmagnetfeldes von außerhalb des Verbindungsmittels mit dem Antrieb des Magnetfeldes wechselwirkt, wodurch ein entsprechendes Halteteil von einer Halte- und eine Freigabestellung bewegbar ist und in das gegenüber liegende Bauelement einfährt. Aus der DE 10 2009 049 967 ist ein weiteres Verbindungsmittel bekannt, bei dem ebenfalls unter Einwirkung eines zeitlich veränderlichen Antriebsmagnetfeldes ein zwangsgeführter Stift zwischen dem ersten und dem zweiten Teilgehäuse verstellt wird. Dieser Stift fährt gewissermaßen aus dem ersten Teilgehäuse in das als Aufnahme ausgebildete zweite Teilgehäuse, das an dem benachbarten Bauelement fixiert ist. Die Zwangsführung bietet dabei die optimale Führung für den Stift und ermöglicht ein sicheres und exaktes Einfahren des Stiftes in die gegenüberliegende Aufnahme des zweiten Teilgehäuses. Als nachteilig ist bei diesem Stand der Technik anzusehen, dass stets ein rotierendes und zeitlich veränderliches Magnetfeld mit entsprechender Störungsanfälligkeit und der damit einhergehenden Gefahr eines unabsichtlichen Öffnens des Verbindungsmittels notwendig ist. Zudem wirkt dieses Magnetfeld direkt als Antrieb für den Stift.

Damit stellt sich der vorliegenden Erfindung die Aufgabe, einen einfachen und wenig störungsanfälligen Mechanismus für ein unter einem zeitlich veränderlichen Magnetfeld angetriebenes Verbindungsmittel zu schaffen.

Diese Aufgabe wird erfindungsgemäß dadurch gelöst, dass zum Ein- und Ausfahren des Verstellgliedes mindestens ein in dem Teilgehäuse angeordneter Magnet dient, welcher von außerhalb des Teilgehäuses zwischen zwei der Vorposition und der Fixierposition entsprechenden Stellungen des Verstellgliedes verstellbar ist.

Das Verbindungsmittel umfasst zwei miteinander zu verbindende Teilgehäuse, wobei ein Teilgehäuse einem ersten Bauelement und das andere Teilgehäuse dem damit zu verbindenden Bauelement zugeordnet ist. Eines der Teilgehäuse nimmt dabei die Verstell- und Verriegelungsmechanismen auf. In letzterem befindet sich neben dem mindestens einen, zwischen einer Vor- oder Parkposition und einer Fixierposition verstellbaren Verstellglied auch mindestens ein als Antrieb für das Verstellglied dienender Magnet. Dieser kann von außerhalb des Gehäuses zwischen zwei Positionen verstellt werden, welche auf die Vor- und Fixierposition des Verstellgliedes abgestimmt sind. Mit dem Ansprechen des Magneten geht also eine Verstellung des Verstellgliedes und damit ein Schließen oder Öffnen des Verbindungsmittels einher.

Ein wesentlicher Vorteil der erfindungsgemäßen Lösung liegt in der Einfachheit und der damit einhergehenden Störungsunanfälligkeit des Systems in Bezug auf das Verstellen des Verstellgliedes zwischen Vor- oder Park- und Fixierposition zum Schließen und Öffnen des Verbindungsmittels. In diesem Sinne ist vorgesehen, dass der Magnet als zweipoliger Magnet zur Erzeugung eines temporären statischen Magnetfeldes ausgebildet ist. Der Magnet ist hälftig in Nord- und Südpol geteilt. D. h. zum Schließen und Öffnen des Verbindungsmittels wird im Gegensatz zu den aus dem Stand der Technik bekannten Lösungen kein rotierendes Magnetfeld benötigt, sondern lediglich ein temporär statisches. Es genügt also ein vergleichsweise einfacher magnetischer Mechanismus, um das Verstellglied zwischen den zwei hier nur benötigten Positionen von außerhalb des Gehäuses verstellen zu können.

Dabei sieht eine Variante der Erfindung vor, dass der Magnet drehbar auf einer Welle gelagert ist, d. h. bei Heranführen des Magnetpols wird der Magnet in eine Rotation versetzt, die letztlich in ein Hin- und Herfahren des Verstellgliedes übergeht. Der durch die Welle angetriebene Magnet, der vorzugsweise eine zylindrische Geometrie aufweist, kann also zwischen zwei Stellungen hin- und herrotieren und dank der konstruktiven Ausbildung des Teilgehäuses mit dem darin angeordneten Verstellglied führt diese Rotation zwangsläufig auch zum Verfahren des Verstellgliedes zwischen dessen Vor- und Fixierposition. Da es auch darum geht, eine tatsächlich dauerhafte Verschlusswirkung zu erreichen, ist vorgesehen, dass der Magnet verdrehsicher auf der Welle gelagert ist. Einerseits ist damit die Übertragung des Drehmomentes von dem Magneten über die Welle auf das Verstellglied gewährleistet, andererseits bleibt durch den Formschluss zwischen zumindest einem Teilabschnitt der Welle und dem Magneten jegliches Verrutschen, auch etwa bei der Beanspruchung durch Schwingungen, ausgeschlossen.

Weil das Verstellglied sich geradlinig zwischen seinen Positionen bewegt, der Magnet aber durch Rotation angetrieben wird, empfiehlt es sich, dass zur Überführung der Rotation des Magneten in eine translatorische Bewegung des Verstellgliedes eine Zahnverbindung dient. Die bereits beschriebene Welle leitet das auf den Magneten ausgeübte Drehmoment weiter, wo es auf die Zahnverbindung übergeht. Auf der Welle sitzt hierzu ein Zahnrad, dessen Rotation auf eine dem Verstellglied zugeordnete Zahnstange übertragen wird.

Ein zentraler Aspekt der Erfindung liegt auf dem Zusammenspiel des Magneten mit seinem temporär statischen zweipoligen Magnetfeld und dem Verstellglied. In diesem Zusammenhang ist vorgesehen, dass die Zahnverbindung so abgestimmt ist, dass eine halbe Umdrehung des Magneten dem Verfahren des Verstellgliedes zwischen Vor- oder Park- und Fixierposition bzw. bei Rotation in die andere Richtung zwischen Fixier- und Vorposition entspricht. Auch andere Relationen sind natürlich denkbar. Die Zahnverbindung besteht aus dem bereits beschriebenen Zahnrad auf der Welle und einer entsprechenden, eine Zahnstange aufweisenden verstellgliedseitigen Kulisse. Die Zahnverbindung ist also so angeordnet und/oder ausgebildet, dass die Rotation des Magneten um z. B. 180 Grad beim Heranführen des Magnetpols ein Verfahren des Verstellgliedes zwischen dessen Vor- und Fixierposition bedingt.

Was die Ausbildung des Verstellgliedes betrifft, wird vorgeschlagen, dass das Verstellglied an seiner Außenseite einen Klemmbolzen und/oder an seiner Innenseite eine Führungskulisse aufweist. Die innenseitige Führungskulisse dient also zum Hin- und Herfahren des Verstellgliedes in dem Teilgehäuse. An seiner Außenseite weist das Verstellglied einen Klemmbolzen auf, der zwischen der Vor- oder Parkposition in dem Teilgehäuse und der Fixierposition außerhalb des Teilgehäuses verfahrbar ist.

Weil die Kräfte bzw. Momente in beiderlei Richtung von dem Magneten auf das Verstellglied ausgeübt werden können müssen, ist es zweckmäßig, wenn die Führungskulisse aus vier in einem Rechteck angeordneten Flanken besteht, von denen mindestens eine Flanke eine Zahnstange aufweist oder als solche ausgebildet ist und zwar die obere und/oder die untere Flanke.

Die beiden Teilgehäuse können auf verschiedene Weise miteinander verbunden werden, bevor sie dann unterschiedlichen, miteinander zu verbindenden Bauelementen zugeordnet werden. Es empfiehlt sich, dass ein äußeres Teilgehäuse als Aufnahme für ein inneres Teilgehäuse dient, wobei letzteres die Verstell- und Verriegelungsmechanismen aufnimmt. Entsprechende Kulissen an der Außenseite des inneren Gehäuses sowie der Innenseite des äußeren Gehäuses dienen dabei zur Unterstützung dieser Steckverbindung zwischen den beiden Gehäuseteilen.

Das Teilgehäuse zur Aufnahme des Verriegelungsmechanismus sollte einen recht massiven Boden aufweisen, da es gilt, dort diverse Aggregate unterzubringen. So ist vorgesehen, dass das innere Teilgehäuse mindestens eine durch eine Wandung von dem Verstellglied getrennte Kammer zur Aufnahme eines Magneten aufweist und dass das Teilgehäuse im Bereich der Wandung und/oder zwischen Kammer und Außenwandung des Teilgehäuses Lager für die quer zu den Magneten angeordnete Welle aufweist.

Um die Rotation bei Aufbringen des temporär statischen Magnetfeldes und damit das Verfahren der Verstellglieder in entgegen gesetzte Richtung zu gewährleisten, ist es notwendig, dass die Verstellglieder jeweils auf gegenüberliegenden Flanken Zahnstangen aufweisen, d. h. ein Verstellglied weist eine als untere Flanke ausgebildete Zahnstange auf, das andere eine obere.

Zwecks Verankerung der Verstellglieder in dem gegenüberliegenden Teilgehäuse und damit optimaler Verbindung zwischen beiden Teilgehäusen und damit der jeweiligen Bauelemente, denen diese zugeordnet sind, sollte das innere Teilgehäuse mit zwei Verstellgliedern ausgerüstet sein. Konkret sind in dem inneren Teilgehäuse nach einer Ausführung der Erfindung zwei in entgegen gesetzter Richtung verstellbare Verstellglieder angeordnet. Diese verfahren beim Schließen der Verbindung beide nach außen und beim Öffnen der Verbindung beide nach innen. Jedem dieser Verstellglieder wiederum ist ein eigener Magnet zugeordnet. Wird also ein Magnetpol von außen an das Gehäuse herangeführt, werden beide Magnete um jeweils 180 Grad in Rotation versetzt, sodass die beiden Verstellglieder aus- oder einfahren können.

Eine weitere vorteilhafte Ausführungsform der Erfindung sieht vor, dass in dem inneren Teilgehäuse vier Verstellglieder angeordnet sind, wobei benachbarte Verstellglieder in entgegen gesetzter Richtung verstellbar sind. Es handelt sich dabei um eine Art Dopplung der Verstellglieder, was eine bessere Führung der Verstellglieder und damit einen noch zuverlässigeren Schließ- und Öffnungsmechanismus gewährleistet. Anstatt eines einzelnen Verstellgliedes in die jeweilige Richtung ist ein Paar von Verstellgliedern vorgesehen, wobei benachbarte Verstellglieder eben in entgegen gesetzter Richtung verfahrbar ausgebildet sein sollen.

Damit ausreichend Platz für diese Mechanismen gegeben ist, weist das innere Teilgehäuse mittig eine als Ausnehmung in Gehäuseboden und/oder Öffnung in einander gegenüber liegenden Seiten der Außenwandung des Teilgehäuses ausgebildete Aufnahme für mindestens ein Verstellglied auf. Es befindet sich also im Gehäuseboden eine Art Schlitz zur Aufnahme beider Verstellglieder. Dieser Schlitz durchschreitet einerseits den Gehäuseboden und andererseits auch die Gehäusewandung, sodass eine entsprechende Führung für die Verstellglieder realisiert ist.

Bekanntlich dient das innere Teilgehäuse zur Aufnahme der Verstell- und Verriegelungsmechanismen. Es empfiehlt sich daher, dass ein äußeres Teilgehäuse als Aufnahme für ein inneres Teilgehäuse dient, dass beide Gehäuseteile also ineinander gesteckt werden. Das komplette Innenleben des inneren Teilgehäuses in Form von Magneten, Verstellgliedern oder Zahnstangen, also sämtliche kompliziert bauenden Teile werden von dem Einsatz aufgenommen. Dieser kann z. B. aus Kunststoff hergestellt und vorgefertigt werden. Bevor dieser als Ganzes in das entsprechende Teilgehäuse eingesetzt wird.

Eine weitere bevorzugte Ausführungsform der Erfindung sieht vor, dass das Verbindungsmittel mit einer Hemmvorrichtung zum Fangen des Magnetfeldes der Magnete ausgerüstet ist. Durch ihre Eigenschaften ist die Hemmvorrichtung in der Lage, das Magnetfeld der Magneten zu fangen, hält diese in ihrer Position und verhindert, dass sich das erfindungsgemäße Verbindungsmittel durch äußere Einflüsse, etwa durch Vibrationen oder Schwingungen ungewollt öffnet.

Die Erfindung betrifft außerdem ein Verfahren zum Herstellen und Lösen einer Verbindung zwischen Bauelementen, Möbeln oder Teilen von diesen, wobei das Verbindungsmittel zwei miteinander zu verbindende Teilgehäuse umfasst, von denen ein Teilgehäuse mindestens ein zwischen einer eingefahrenen Vorposition und einer ausgefahrenen Fixierposition verstellbares Verstellglied aufweist.

Dieses Verfahren zeichnet sich dadurch aus, dass das Verstellglied von mindestens einem von außerhalb des Gehäuses zwischen zwei der Vorposition und der Fixierposition entsprechenden Stellungen verstellbaren Magneten angetrieben wird.

Das erfindungsgemäße System umfasst zwei Magneten, die ihrerseits durch Aufbringen eines temporäreren statischen Magnetfeldes von außerhalb des Gehäuses in Rotation versetzt werden. Auf diese Weise werden über eine zwischengeschaltete Welle und eine Zahnverbindung translatorische Bewegungen auf zweien in entgegen gesetzter Richtung verfahrbare Verstellglieder ausgeübt.

Die Erfindung zeichnet sich insbesondere dadurch aus, dass ein Verfahren und ein Verbindungsmittel zur Durchführung dieses Verfahrens zum lösbaren Verbinden von Bauelementen, Möbeln oder Teilen von diesen geschaffen sind, die sich durch Einfachheit und Störungsunanfälligkeit auszeichnen. Es wird nur ein temporäres statisches Magnetfeld erzeugt, um zwei in dem Gehäuse gelagerte Magneten in Rotation zu versetzen. Diese Magneten setzen eine Welle und schließlich über eine Zahnverbindung zwei Verstellglieder in Bewegung, deren außenseitige Klemmbolzen sich dann an dem gegenüberliegenden Teilgehäuse fixieren und somit eine dauerhaft zuverlässige und höchsten statischen und dynamischen Beanspruchungen standhaltende Verbindung schaffen. Von zentraler Bedeutung ist dabei das abgestimmte Zusammenspiel der zwei Magnete mit den zwei Verstellgliedern bei der bevorzugten Ausführungsform. Werden die Magnete in Rotation versetzt, wird dieses Drehmoment über die Welle und die Zahnverbindung auf die Verstellglieder übertragen. Dabei sind diese Bauteile so synchronisiert, dass ein vorgegebener Grad an Umdrehung des Magneten, vorzugsweise eine Umdrehung von knapp 180 Grad dem Verfahren der beiden Verstellglieder zwischen ihrer eingefahrenen Vor- und ihrer ausgefahrenen Fixierposition entspricht.

Weitere Einzelheiten und Vorteile des Erfindungsgegenstandes ergeben sich aus der nachfolgenden Beschreibung der der zugehörigen Zeichnung, in der ein bevorzugtes Ausführungsbeispiel mit den dazu notwendigen Einzelheiten und Einzelteilen dargestellt ist. Es zeigen:
- Figur 1: ein Verbindungsmittel in Explosionsdarstellung,
- Figur 2: die Draufsicht auf ein Teilgehäuse mit Verstellgliedern in Fixierposition,
- Figur 3: die Draufsicht auf ein Teilgehäuse mit Verstellgliedern in Vor-oder Parkposition und
- Figur 4: eine Variante zu Figur 1
- Figur 5: eine Variante zu Figur 2,
- Figur 6: eine Variante zu Figur 3 und
- Figur 7: eine weitere Variante zu Figur 1.

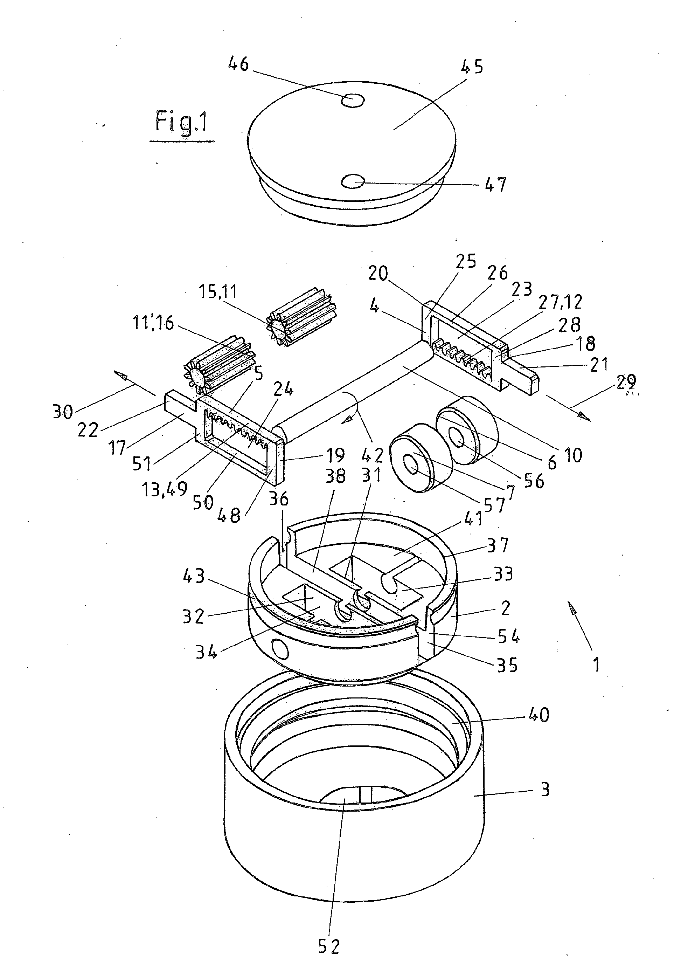

Figur 1 zeigt in Explosionsdarstellung die Bauteile Deckel 45, Zahnrad 15, 16, Welle 10, Verstellglied 4, 5, Teilgehäuse 2 und Teilgehäuse 3. Über Bohrungen 46, 47, 52 werden Deckel 45 bzw. Teilgehäuse 3 über hier nicht gezeigte Befestigungsmittel an den miteinander zu verbindenden Bauelementen, Möbeln, Teilen von diesen oder ähnlichem fixiert. Zur eigentlichen Verbindung der Teilgehäuse 2, 3 und damit zur Verwirklichung des Verbindungsmittels 1 kommt es dann durch das Ausfahren der beiden Verstellglieder 4, 5 in entgegen gesetzte Richtung nach außen und einer Art Klemmwirkung der Klemmbolzen 21, 22 an den Außenseiten 17, 18 der beiden Verstellglieder 4, 5. Damit die Verstellglieder 4, 5 bzw. deren Klemmbolzen 21, 22 aus- bzw. einfahren können, sind die Magneten 6, 7 durch Erzeugen eines temporären statischen Magnetfeldes in Rotation um 180 Grad zu versetzen, was besonders gut möglich ist, weil die Magneten 6, 7 "nur" Nord- und Südpol aufweisen, also so ausgebildet bzw. angeordnet sind, dass sie gar nicht anders können, als entsprechend zu rotieren. Die Rotation der Magnete 6, 7 wird dann auf die Welle 10 und von dort über die Zahnverbindung 11, 11' auf die Verstellglieder 4, 5 übertragen. Der Welle 10 sind dazu endseitig die beiden Zahnräder 15, 16 zugeordnet, deren Rotation in eine translatorische Verfahrbewegung der Verstellglieder 4, 5 überführt wird. Verantwortlich hierfür ist eine Führungskulisse 23, 24 an der jeweiligen Innenseite 19, 20 der Verstellglieder 4, 5. Diese Führungskulisse 23, 24 besteht aus Flanken 25 - 28 und 48 - 51. Entscheidend sind dabei die beiden als Zahnstangen 12, 13 ausgebildeten bzw. eine solche aufweisenden Flanken 27 und 49, nämlich eine untere Flanke 27 bzw. obere Flanke 49, um das Verfahren der beiden Verstellglieder 4, 5 aufeinander zu bzw. voneinander weg zu ermöglichen. In der Darstellung gem. Figur 1 entspricht eine Rotation der Welle 10 im Uhrzeigersinn, angedeutet durch den Pfeil 42, der translatorischen Bewegung der Verstellglieder 4, 5 in Pfeilrichtung 29 bzw. 30. Das Teilgehäuse 2 weist in diesem Ausführungsbeispiel einen vergleichsweise massiv ausgebildeten Gehäuseboden 41 auf, darin befinden sich jeweils Kammern 33, 34 für die Magnete 6, 7 und die Wandungen 31, 32 zur Trennung dieser Kammern 33, 34 von der mittigen Ausnehmung 38. Letztere erstreckt sich durch den Gehäuseboden 41 wie die Außenwandung 37 an den Seiten 35, 36. Ferner weist das Teilgehäuse 2 noch eine Nut 43 auf, die mit einem O-Ring 40 am Teilgehäuse 3 korrespondiert.

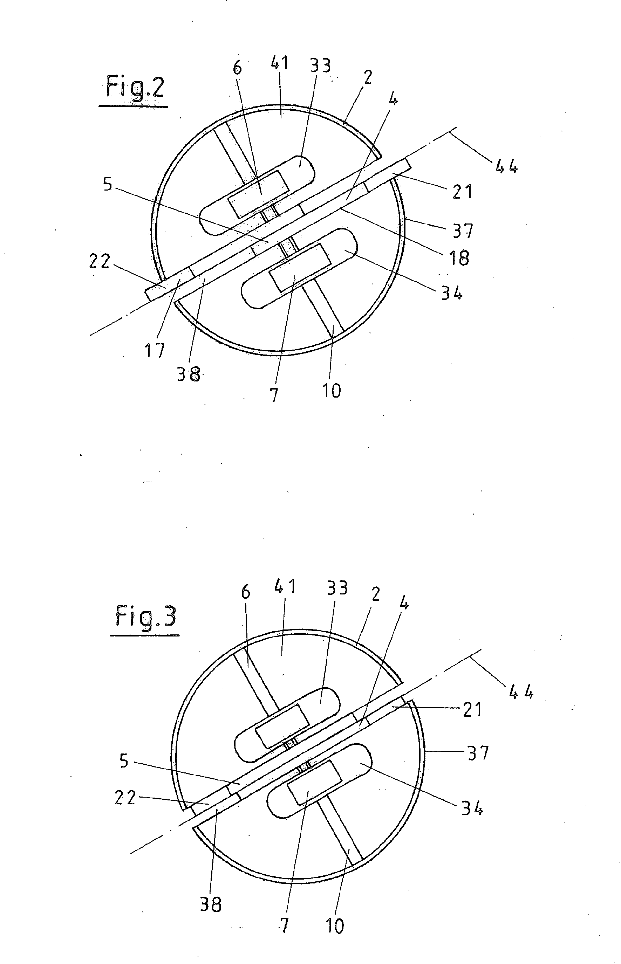

In Figur 2 ist das Teilgehäuse 2 mit seinem Innenleben dargestellt und zwar mit ausgefahrenen Verstellgliedern 4, 5. Die Magnete 6, 7 sind in den Kammern 33, 34 positioniert und führen bei entsprechender Rotation gleichzeitig zu einer Rotation der Welle 10, die dann in eine Verschiebung der Verstellglieder 4, 5 in Richtung Längsachse 44 führt. Gut erkennbar, die beiden Klemmbolzen 21, 22 an der Außenseite 17, 18 der Verstellglieder 4, 5, die sich dann in dem hier nicht dargestellten anderen Teilgehäuse fixieren.

Hierzu zeigt Figur 3 nach einer Betätigung, sprich Rotation der Magnete 6, 7 um 180 Grad das Teilgehäuse 2 mit Verstellgliedern 4, 5 in der eingefahrenen Vor- oder Parkposition.

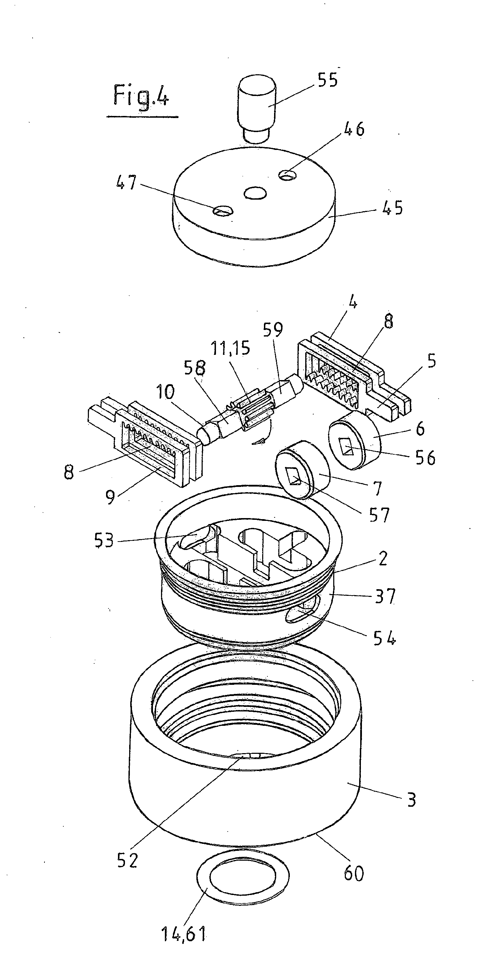

Die Figuren 4, 5 und 6 zeigen eine abgewandelte Ausführungsform der Erfindung.

Zunächst zeigt Figur 3 im Bereich des Deckels 45 zusätzlich die Spannhülse 55. Darunter sind dann die paarweise angeordneten Verstellglieder 4, 5 und 8, 9 zu erkennen. Diese doppelt gesicherte Anordnung soll vor allem eine Art Kippbewegung und damit ein vergleichmäßigtes und sicheres Ein- und Ausfahren der Verstellglieder 4, 5, 8, 9 ermöglichen. Auch die Welle 10 unterscheidet sich von der in Figur 1 dargestellten und zwar zunächst dadurch, dass nur eine einzige mittige Zahnverbindung 11 in Form des Zahnrades 15 dargestellt ist. Darüber hinaus weist die Welle 10 hier viereckige Abschnitte 58, 59 auf, die wiederum mit den Bohrungen 56, 57 in den Magneten 6, 7 korrespondieren. Die Übertragung des Drehmomentes von den Magneten 6, 7 über die Welle 10 und die Zahnverbindung 11 auf die Verstellglieder 4, 5, 8, 9 ist damit präziser realisierbar. In der Außenwandung 37 des Teilgehäuses 2 sind außerdem Bohrungen 53, 54 vorgesehen, die insbesondere ein Herauskippen der Verstellglieder 4, 5, 8, 9 nach oben verhindern und damit eine bessere Führung für diese Verstellglieder 4, 5, 8, 9 bieten sollen. An der Unterseite 60 des Teilgehäuses 3 findet sich die Hemmvorrichtung 14 in Form eines z. B. dort zu fixierenden Rings 61 aus Stahl. Diese Hemmvorrichtung dient maßgeblich dazu, das Magnetfeld des Magneten zu fangen, die Magneten 5, 6 in ihrer Position zu halten und dadurch ein ungewolltes Öffnen des Verbindungsmittels auch bei fortgesetzter dynamischer Beanspruchung zu verhindern.

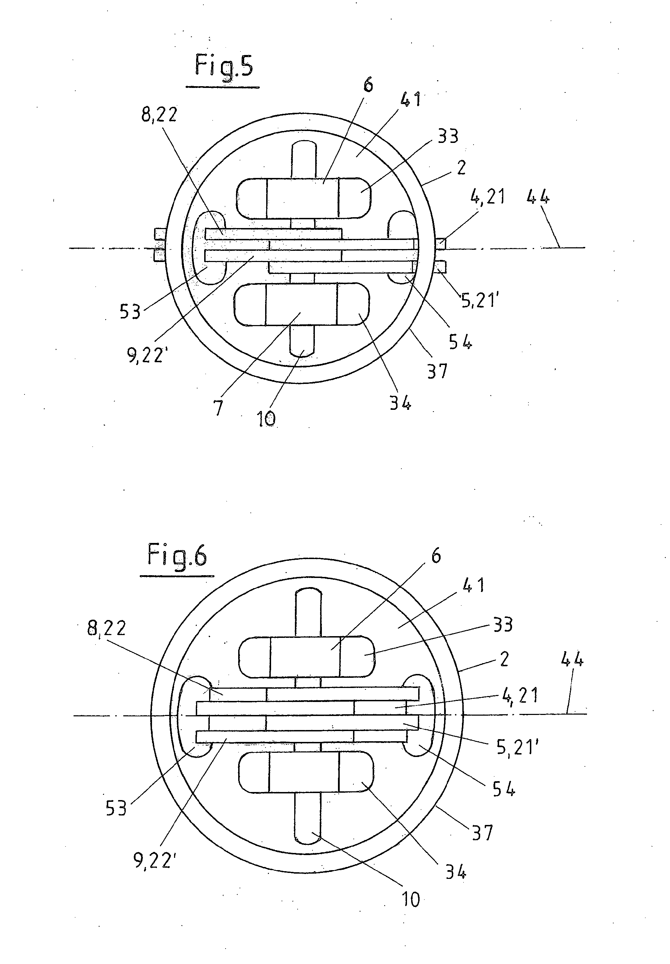

Auch die Figuren 5 und 6 zeigen das Paket mit vier Verstellgliedern 4, 5 und 8, 9 zunächst in aus- und dann in eingefahrener Position. Benachbarte Verstellglieder, z. B. 8 und 4 oder 4 und 9 sind in unterschiedlicher Richtung verstellbar. Insgesamt können in jede Richtung zwei Verstellglieder 4, 5 bzw. 8, 9 ein- und ausfahren. In der Außenwandung 37 befinden sich dazu Öffnungen 53, 54.

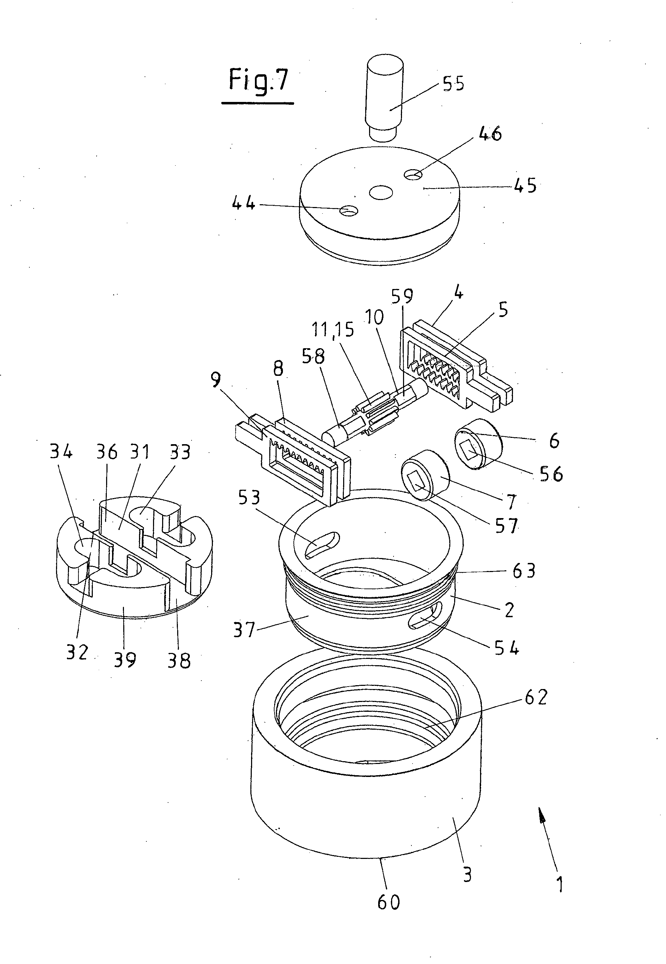

Schließlich zeigt Figur 7 eine weitere Explosionsdarstellung des erfindungsgemäßen Verbindungsmittels 1. Der entscheidende Unterschied zur Darstellung gem. Figur 1 oder 4 liegt dabei darin, dass das innere Teilgehäuse 2 mit einem separaten, z. B. aus Kunststoff und damit auf vergleichsweise einfache Art hergestellten Einsatz 39 ausgerüstet ist. Dieser vorgefertigte Einsatz 39 umfasst die kompliziert bauende Kammer 33, 34 zur Aufnahme der Magneten 6, 7 und damit die Wandungen 31, 32 zur Ausnehmung 38 sowie die Ausnehmungen 64, 65 zur Aufnahme der Welle 10. Nachdem der Einsatz 39 in das Teilgehäuse 2 mit den Magneten 6, 7, den Verstellgliedern 4, 5 und 8, 9 sowie der Welle 10 eingesetzt ist, erfolgt dann die Verbindung zwischen den beiden Teilgehäusen 2 und 3, was durch die Kulissen 62 an der Innenseite des Teilgehäuses 3 bzw. der Außenseite des Teilgehäuses 2 ermöglicht wird.

## Patentansprüche

1. Verbindungsmittel (1) zum lösbaren Verbinden von Bauelementen, Möbeln oder Teilen von diesen, mit zwei miteinander zu verbindenden Teilgehäusen (2, 3), von denen ein Teilgehäuse (2) mindestens ein zwischen einer eingefahrenen Vorposition und einer ausgefahrenen Fixierposition verstellbares Verstellglied (4, 5) aufweist,
**dadurch gekennzeichnet,**
**dass** zum Ein- und Ausfahren des Verstellgliedes (4, 5) mindestens ein in dem Teilgehäuse (2) angeordneter Magnet (6, 7) dient, welcher von außerhalb des Teilgehäuses (2) zwischen zwei der Vorposition und der Fixierposition des Verstellgliedes (4, 5) entsprechenden Stellungen verstellbar ist.

2. Verbindungsmittel nach Anspruch 1,
**dadurch gekennzeichnet,**
**dass** der Magnet (6, 7) als zweipoliger Magnet zur Erzeugung eines temporären statischen Magnetfeldes ausgebildet ist.

3. Verbindungsmittel nach Anspruch 1,
**dadurch gekennzeichnet,**
**dass** der Magnet (6, 7) drehbar auf einer Welle (10) gelagert ist.

4. Verbindungsmittel nach Anspruch 3,
**dadurch gekennzeichnet,**
**dass** zur Überführung der Rotation des Magneten (6, 7) in eine translatorische Bewegung des Verstellgliedes (4, 5) eine Zahnverbindung (11) dient.

5. Verbindungsmittel nach Anspruch 4,
**dadurch gekennzeichnet,**
**dass** die Zahnverbindung (11) so abgestimmt ist, dass eine halbe Umdrehung des Magneten (6, 7) dem Verfahren des Verstellgliedes (4, 5) zwischen Vor- und Fixierposition entspricht.

6. Verbindungsmittel nach Anspruch 1,
**dadurch gekennzeichnet,**
**dass** das Verstellglied (4, 5) an seiner Außenseite (17, 18) einen Klemmbolzen (21, 22) und/oder an seiner Innenseite (19, 20) eine Führungskulisse (23, 24) aufweist.

7. Verbindungsmittel nach Anspruch 6,
**dadurch gekennzeichnet,**
**dass** die Führungskulisse (23, 24) aus vier in einem Rechteck angeordneten Flanken (25 - 28, 48 - 51) besteht, von denen mindestens eine Flanke (27, 49) eine Zahnstange (12, 13) aufweist.

8. Verbindungsmittel nach Anspruch 1,
**dadurch gekennzeichnet,**
**dass** ein äußeres Teilgehäuse (3) als Aufnahme für ein inneres Teilgehäuse (2) dient.

9. Verbindungsmittel nach Anspruch 1,
**dadurch gekennzeichnet,**
**dass** das innere Teilgehäuse (2) mindestens eine durch eine Wandung (31, 32) von dem Verstellglied (4, 5) getrennte Kammer (33, 34) zur Aufnahme eines Magneten (6, 7) aufweist.

10. Verbindungsmittel nach Anspruch 1,
**dadurch gekennzeichnet,**
**dass** in dem inneren Teilgehäuse (2) zwei in entgegen gesetzter Richtung (29, 30) verstellbare Verstellglieder (4, 5) angeordnet sind.

11. Verbindungsmittel nach Anspruch 1,
**dadurch gekennzeichnet,**
**dass** in dem inneren Teilgehäuse (2) vier Verstellglieder (4, 5, 8, 9) angeordnet sind, wobei benachbarte Verstellglieder in entgegen gesetzter Richtung (29, 30) verstellbar sind.

12. Verbindungsmittel nach Anspruch 11,
**dadurch gekennzeichnet,**
**dass** die Verstellglieder (4, 5) jeweils auf gegenüber liegenden Flanken (27, 49) Zahnstangen (12, 13) aufweisen.

13. Verbindungsmittel nach Anspruch 1,
**dadurch gekennzeichnet,**
**dass** das innere Teilgehäuse (2, 3) mittig eine als Ausnehmung (38) in Gehäuseboden (41) und/oder Öffnung (54) in einander gegenüber liegenden Seiten (35, 36) der Außenwandung (37) des Teilgehäuses (2, 3) ausgebildete Aufnahme für mindestens ein Verstellglied (4, 5) aufweist.

14. Verbindungsmittel nach Anspruch 8 und 13,
**dadurch gekennzeichnet,**
**dass** das innere Teilgehäuse (2) einen die beiden Kammern (33, 34) und/oder die Ausnehmung (38) umfassenden Einsatz (39) aufweist.

15. Verbindungsmittel nach Anspruch 1,
**dadurch gekennzeichnet,**
**dass** das Verbindungsmittel (1) mit einer Hemmvorrichtung (14) zum Fangen des Magnetfeldes der Magneten (6, 7) ausgerüstet ist.

16. Verfahren zum Herstellen und Lösen einer Verbindung zwischen Bauelementen, Möbeln oder Teilen von diesen, wobei das Verbindungsmittel zwei miteinander zu verbindende Teilgehäuse umfasst, von denen ein Teilgehäuse mindestens ein zwischen einer eingefahrenen Vorposition und einer ausgefahrenen Fixierposition verstellbares Verstellglied aufweist,
**dadurch gekennzeichnet,**
**dass** das Verstellglied von mindestens einem von außerhalb des Gehäuses zwischen zwei der Vorposition und der Fixierposition entsprechenden Stellungen verstellbaren Magneten angetrieben wird.
